# EUROPÄISCHE PATENTANMELDUNG

(11) **EP 0 578 266 A2**
(43) Veröffentlichungstag der Anmeldung: **12.01.1994**
(21) Anmeldenummer: 93111128.0
(22) Anmeldetag: 09.07.1993
(51) Int. Cl.: A23K 1/14, A23K 1/18

(54) **Mischfutter**

(30) Priorität: 09.07.1992 DE 4222509
(71) Anmelder: Lange, Wilhelm, D-21224 Rosengarten (DE)
(72) Erfinder: Lange, Wilhelm, D-21224 Rosengarten (DE)
(74) Vertreter: Dipl.-Ing. H. Hauck, Dipl.-Ing. E. Graalfs, Dipl.-Ing. W. Wehnert, Dr.-Ing. W. Döring, Dr.-Ing. N. Siemons

(57) **Zusammenfassung**

Mischfutter, nämlich Alleinfuttermittel oder Alleinfuttermittel hergestellt mit einem Ergänzungsfuttermittel, welches Getreide und/oder Substitute, tierische und/oder pflanzliche Eiweißträger, tierische und/oder pflanzliche Fette, und Mineral- und Wirkstoffzusätze enthält, wobei der Cholesteringehalt gegenüber üblichen Mischungen reduziert und der Phytosteringehalt erhöht ist.

## Beschreibung

Gegenstand der Erfindung ist ein Mischfutter nach dem Oberbegriff des Anspruches 1.

Ein Mischfutter der vorgenannten Art ist insbesondere für die Tierfütterung im Hinblick auf die Herstellung von Nahrungsmitteln gedacht. So kommt es als Legehennenfutter sowie für die Milch- und Fleischerzeugung in Betracht. Dabei kann es als Alleinfutter oder Ergänzungsfutter unter Zugabe oder nach vorheriger Vermischung anderer Komponenten wie Getreide, Sojaschrot oder anderen eingesetzt werden.

Herkömmliche Mischfutter der eingangs genannten Art sind zusammengesetzt aus Getreide und/oder Nebenprodukten (sogenannte "Substitute"), tierischen und/oder pflanzlichen Eiweißträgern, tierischen und/oder pflanzlichen Fetten und Mineral- und Wirkstoffzusätzen. Dabei beträgt der Cholesteringehalt des Alleinfutters (Gesamtration) z.B. im Legehennenfutter gewöhnlich 220 bis 300 mg/kg.

Die Ernährung des Tieres beeinflußt die Eigenschaften des tierischen Nahrungsmittelproduktes, insbesondere dessen Nähr- und Genußwert. Grundsätzlich ist deshalb erstrebenswert, die Zusammensetzung des Mischfutters so zu wählen, daß ein auf die Bedürfnisse des Menschen am Ende der Nahrungsmittelkette optimal abgestimmtes tierisches Ernährungsprodukt erzeugt werden kann.

Davon ausgehend liegt der Erfindung die Aufgabe zugrunde, ein Mischfutter zu schaffen, das von Nutztieren zu einem hochwertigen Ernährungsprodukt umgesetzt wird, welches besser auf die Bedürfnisse des Menschen abgestimmt ist.

Die Lösung dieser Aufgabe ist im Anspruch 1 angegeben. Vorteilhafte Ausgestaltungen sind in den Unteransprüchen enthalten.

Die Erfindung geht von der Erkenntnis aus, daß ein Teil des Cholesterins im Körper synthetisiert und ein weiterer Teil über die Nahrung aufgenommen wird. Außerdem wird die Auffassung zugrunde gelegt, daß durch falsche Ernährung, aber auch durch bestimmte Enzymdefekte erhöhte Cholesterinspiegel im Serum entstehen können, die mit ursächlich für Krankheiten wie Arteriosklerose sein können. Das im Fleisch oder in Hühnereiern vorhandene Cholesterin wird teilweise von den Tieren mit dem Futter aufgenommen und darüber hinaus von den Tieren in Eigensynthese erzeugt. Die Erfindung beruht weiterhin auf der Erkenntnis, daß die Cholesterin-Eigensynthese der Tiere reduziert werden kann, wenn das Tierfutter einen gewissen Phytosteringehalt aufweist. Mit der Erfindung wird nun der Cholesteringehalt im Futtermittel gegenüber herkömmlichen Werten herabgesetzt und der Phytosteringehalt gleichzeitig erhöht, um über eine Senkung der Cholesterinanteile im tierischen Nahrungsmittel und Vermeidung der Eigensynthese im Tier die Cholesterinaufnahme durch den Menschen zu vermindern. Bevorzugt wird der Cholesteringehalt des Futtermittels auf etwa die Hälfte des herkömmlichen Wertes herabgesetzt. Das führt zu einer beträchtlichen Minderung des Cholesteringehaltes im Tierprodukt.

Beispielsweise wird im Ei Cholesterin hauptsächlich im Dotter gefunden. Bei normal erzeugten Eiern ermittelt man hier 12 000 bis 14 500 mg/kg (durchschnittlich 13 250 mg/kg) im Dotter. Die Legehennenfütterung mit erfindungsgemäßem Futtermittel führt je nach Alter, Rasse, Haltung und Klima zu einer Verminderung des Cholesterins im Ei von 20 bis 35 %.

Bei einem cholesterinreduzierten Mischfutter nach der Erfindung ist der Energiegehalt stärker auf pflanzlichen Fetten (z.B. Palmfett, Sojaöl, Sonnenblumenöl oder Rapsöl) zu Lasten von Stärke aufgebaut. So kann ein bevorzugtes Legehennenfutter in der Analyse 15 bis 18 % Protein, 20 bis 35 % Stärke und 5 bis 11 % Fette enthalten (allesamt Gew.-%).

Im Vergleich dazu enthalten bisher übliche Legehennenfutter 15 bis 18 % Protein, 30 bis 40 % Stärke und 2 bis 7 % Fette.

Bevorzugt weisen die Komponenten des Futtermittels verhältnismäßig niedrige Cholesteringehalte bei gleichzeitig verhältnismäßig hohen Phytosteringehalten auf. Phytosterine sind chemisch mit Cholesterin verwandt und werden wie dieses vom Blut aufgenommen. Hierbei verzichtet man weitgehend auf Futtermittelkomponenten tierischer Herkunft und ersetzt diese durch Produkte pflanzlicher Herkunft.

Vorteilhaft können dem Futter direkt 0,2 % bis 0,8 % reines Phytosterin zugeführt werden.

Als Komponenten kann ein Mischfutter für Legehennen 35 bis 50 % Getreide und/oder Substitute ausgewählter Herkunft, 25 bis 40 % Eiweißträger hauptsächlich pflanzlicher Herkunft, 3 bis 10 % überwiegend pflanzliche Fette und 5 bis 8 % Minerale und Wirkstoffe enthalten.

Demgegenüber enthalten bisherige Mischfutter für Legehennen 45 bis 60 % Getreide und/oder Substitute, 20 bis 35 % Eiweißträger pflanzlicher oder tierischer Herkunft, 0 bis 5 % Fette jeglicher Herkunft und 5 bis 8 % Minerale und Wirkstoffe.

Als vorteilhaft hat sich eine Vitamin-C-Supplementierung des Futtermittels erwiesen. Bevorzugt weist das Futtermittel einen Zusatz von 50 bis 100 mg/kg Vitamin C auf.

Die Verabreichungsform des Futtermittels ist beliebig, d.h. in Mehl oder Preßform, gekrümelt, extrudiert und/oder auch expandiert.

Ein bevorzugtes Legefutter enthält 40 bis 60 % weniger Cholesterin. Es enthält in der Analyse 15 bis 18 % Protein, 20 bis 35 % Stärke und 5 bis 11 % Fette. Ferner weist es auf Kosten von Komponenten tierischer Herkunft bevorzugt pflanzliche Fette und Leguminosen auf, welche verhältnismäßig niedrige Cholesteringehalte und verhältnismäßig hohe Phytosteringehalte haben. Als Komponenten enthält es 35 bis 50 % Getreide und/oder Substitute (Energieträger), 25 bis 40 % hauptsächlich pflanzliche Eiweißfuttermittel (Eiweißträger), 3 bis 10 % Fette spezieller Herkunft und 5 bis 8 % Minerale und Wirkstoffe.

## Patentansprüche

1. Mischfutter, nämlich Alleinfuttermittel oder Alleinfuttermittel hergestellt mit einem Ergänzungsfuttermittel, welches Getreide und/oder Substitute, tierische und/oder pflanzliche Eiweißträger, tierische und/oder pflanzliche Fette, und Mineral- und Wirkstoffzusätze enthält, dadurch gekennzeichnet, daß der Cholesteringehalt gegenüber üblichen Mischungen, bei denen ein Legehennenalleinfutter z.B. 220 bis 300 mg/kg enthält, reduziert und der Phytosteringehalt erhöht ist.

2. Mischfutter nach Anspruch 1, dadurch gekennzeichnet, daß der Fettgehalt gegenüber üblichen Mischungen erhöht und der Stärkegehalt reduziert ist.

3. Mischfutter nach Anspruch 1 oder 2, dadurch gekennzeichnet, daß der Fettgehalt überwiegend aus pflanzlichen Fetten besteht.

4. Mischfutter nach einem der Ansprüche 1 bis 3, dadurch gekennzeichnet, daß der Rohfasergehalt gegenüber üblichen Mischungen erhöht ist.

5. Mischfutter nach einem der Ansprüche 1 bis 4, dadurch gekennzeichnet, daß der Fettgehalt vollständig oder annähernd vollständig auf pflanzlichen Fetten basiert.

6. Mischfutter nach einem der Ansprüche 1 bis 5, dadurch gekennzeichnet, daß Futtermittelkomponenten tierischer Herkunft weitgehend durch spezielle Produkte pflanzlicher Herkunft ersetzt sind.

7. Mischfutter nach einem der Ansprüche 1 bis 6, dadurch gekennzeichnet, daß das Futter gegenüber üblichen Mischungen einen erhöhten Anteil an phytosterinreichen Komponenten, insbesondere Leguminosen, aufweist.

8. Mischfutter nach einem der Ansprüche 1 bis 7, dadurch gekennzeichnet, daß dem Futter reine Phytosterine zugesetzt werden.

9. Mischfutter nach einem der Ansprüche 1 bis 8, dadurch gekennzeichnet, daß dem Futter 0,2 bis 0,8 % Phytosterine zugesetzt werden.

10. Mischfutter nach einem der Ansprüche 1 bis 9, dadurch gekennzeichnet, daß der Proteingehalt über 15 %, der Stärkegehalt über 20 % und der Fettgehalt über 5 % beträgt.

11. Mischfutter nach einem der Ansprüche 1 bis 10, dadurch gekennzeichnet, daß es z.B. für Legehennen 35 bis 40 % Getreide und/oder Substitute, 25 bis 40 % überwiegend pflanzliche Eiweißträger, 3 bis 10 % überwiegend pflanzliche Fette und 5 bis 8 % Mineral- und Wirkstoffe enthält.

12. Mischfutter nach einem der Ansprüche 1 bis 11, dadurch gekennzeichnet, daß dem Futter Vitamin C zugesetzt wird.

13. Mischfutter nach Anspruch 12, dadurch gekennzeichnet, daß dem Futter 50 bis 100 mg/kg Vitamin C zugesetzt werden.

14. Mischfutter nach einem der Ansprüche 1 bis 12, dadurch gekennzeichnet, daß der Cholesteringehalt um 40 bis 60 % reduziert ist.
